# EUROPÄISCHE PATENTSCHRIFT

(11) **EP 0 392 260 B1**
(45) Veröffentlichungstag und Bekanntmachung des Hinweises auf die Patenterteilung: **29.06.1994**
(21) Anmeldenummer: 90105907.1
(22) Anmeldetag: 28.03.1990
(51) Int. Cl.: F16C 29/06

(54) **Kugelumlaufeinheit mit Zentrierstäben**
Recirculating ball unit with centring rods
Unité à recirculation de billes avec piges de centrage

(30) Priorität: 08.04.1989 DE 3911501; 14.11.1989 DE 3937782
(43) Veröffentlichungstag der Anmeldung: 17.10.1990
(73) Patentinhaber: Jacob, Werner, D-60598 Frankfurt (DE)
(72) Erfinder: Jacob, Werner, D-60598 Frankfurt (DE)
(74) Vertreter: Harwardt, Günther, Dipl.-Ing.

(56) Entgegenhaltungen:
- EP-A- 0 204 101
- WO-A-87/06984
- DE-A- 3 717 162
- DE-C- 208 319
- DE-U- 8 607 236
- FR-A- 2 511 096
- US-A- 3 471 208
- US-A- 3 476 445
- US-A- 3 649 093

## Beschreibung

Die Erfindung betrifft eine Kugelumlaufeinheit für eine Linearkugelführung, die entlang der Längsachse einer im Querschnitt kreisförmigen Führungsschiene bewegbar ist, welche sie wenigstens teilweise umschließt, mit mehreren über den Querschnitt verteilt angeordneten endlosen Kugelreihen, die in einem mehrteiligen Käfig und gegebenenfalls teilweise in einem Grundkörper geführt sind, welche jeweils einen Tragabschnitt, in welchem die Kugeln radial nach innen aus dem Käfig zwecks Anlage an der Führungsschiene herausragen, einen Rückführabschnitt und beide an den Enden verbindende Umlenkabschnitte aufweisen, bei denen sich Tragabschnitt und Rückführabschnitt jeweils parallel zur Längsachse erstrecken und wobei die Käfigteile jeweils Führungsrinnen für die Kugeln bilden, über Zentrierstäbe miteinander verbunden und in einem Grundkörper aufgenommen sind,
Aus der EP-A-0 204 101 ist eine derartige Ausbildung bekannt. Dabei ist der Käfig aus zwei Halbkäfigen gebildet. Deren aneinanderstoßenden Stegteile sind an ihren Stirnflächen mit Vorsprüngen und gegengleichen Ausnehmungen versehen, die im montierten Zustand ineinandergreifen. Alternativ können auch beide Stegenden an ihren aneinander angrenzenden Stegenden jeweils mit Vertiefungen versehen sein. In diese ist ein Stift eingesetzt, der die Stirnfläche überragt und in die Ausnehmung des jeweiligen anderen Steges hineinragt.

Die Vorsprünge und Vertiefungen bzw. Stifte und Vertiefungen dienen zur Zentrierung der Stegteile einander gegenüber.

Bei Kugelumlaufführungen ist es bekannt, die äußeren Tragbahnen, an denen sich die Kugeln im Tragabschnitt abstützen, aus einzelnen Laufbahnsegmenten zu erstellen. Die einzelnen Laufbahnensegmente sind in einem Träger aufgenommen. Der Käfig zur Führung der Kugeln ist in der Regel einteilig ausgebildet.

Aufgabe der Erfindung ist es, eine Kugelumlaufeinheit vorzuschlagen, deren Käfig einfacher herstellbar ist, der jedoch die für die Ausrichtung und Führung der Kugeln erforderliche Stabilität besitzt.

Diese Aufgabe wird erfindungsgemäß dadurch gelöst, daß der Käfig aus Kunststoff besteht und daß die den Käfig bildenden Teile parallel zur Längsachse verlaufende Bohrungen aufweisen, in welche durchgehende Zentrierstäbe eingesetzt sind, die die Käfigteile einandergegenüber und gegenüber dem Grundkörper axial fixieren.

Durch diese Ausbildung ist es möglich, obwohl der Käfig aus Kunststoff hergestellt und aus verschiedenen Segmenten und Einzelteilen zusammengesetzt ist, die für eine sichere Führung der Kugeln erforderliche Steifigkeit zu erreichen.

Es sind verschiedene Befestigungsvarianten für die Zentrierstäbe je nach Ausführung der Kugelumlaufeinheit möglich. Nach einem ersten Ausführungsbeispiel der Erfindung ist vorgesehen, daß bei einem Käfig, der aus Innensegmenten und Kopfstücken besteht, die Zentrierstäbe gegenüber den einen axialen Abschluß bildenden Kopfstücken fixiert sind. Für den Fall, daß zusätzlich noch Endscheiben vorgesehen sind, die endseitig an den Kopfstücken abgestützt sind, sind die Zentrierstäbe gegenüber den Endscheiben fixiert.

Es ist auch möglich, daß bei einem Käfig, der aus Innensegmenten und Kopfstücken besteht die Kopfstücke von an den Enden des Grundkörpers zentrierten Kappen überdeckt sind, gegenüber denen die Zentrierstäbe fixiert sind.

Bevorzugt ist vorgesehen, daß der Käfig aus Innensegmenten mit Stegen und Kopfstücken besteht und daß die Zentrierstäbe durch die Stege der Innensegmente des Käfigs, die sich zwischen zwei benachbarten Tragabschnitten der Kugelreihen befinden, axial hindurchverlaufen. Bei dieser Anordnung wird die Stabilität des Käfigs in Umfangsrichtung besonders verstärkt.

Eine bevorzugte Befestigungsmöglichkeit der Zentrierstäbe wird durch Schweißen, Verstemmen oder Verschrauben erreicht.

Zur weiteren Erhöhung der Steifigkeit können, wie nach einem weiteren Vorschlag der Erfindung vorgesehen ist, die Zentrierstäbe unter Vorspannung fixiert sein.

Bevorzugte Ausführungsbeispiele der Erfindung sind in der Zeichnung schematisch dargestellt.

Es zeigt
- Figur 1: eine erste Ausführungsform mit einer geschlitzen Version des Grundkörpers und einem aus Segmenten aufgebauten Käfig im Querschnitt (Schnitt C-C gemäß Figur 2),
- Figur 2: in der rechten und linken Hälfte jeweils unterschiedliche Längsschnitte, und zwar entspricht der Schnitt 2a dem Schnitt A-A gemäß Figur 1 und die rechte Hälfte (Figur 2b) dem Schnitt B-B gemäß Figur 1,
- Figur 3: eine alternative Ausführungsform bei der die Kopfstücke durch Kappen überdeckt sind, wobei jeweils die Teilschnitte 3a,3b und 3c Schnitte gemäß Figur 4 nach den Linien A-A, B-B, C-C darstellen,
- Figur 4: einen Querschnitt durch eine Ausführungsform nach Figur 3,
- Figur 5: ein Detail Y gemäß Figur 3 in vergrößerter Darstellung.

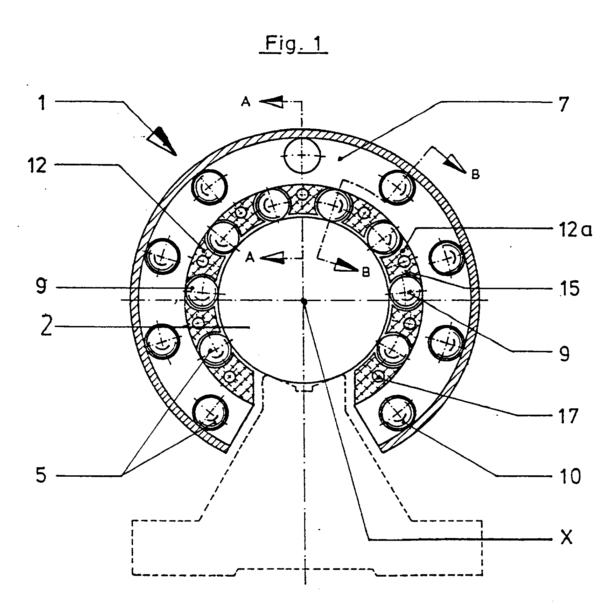

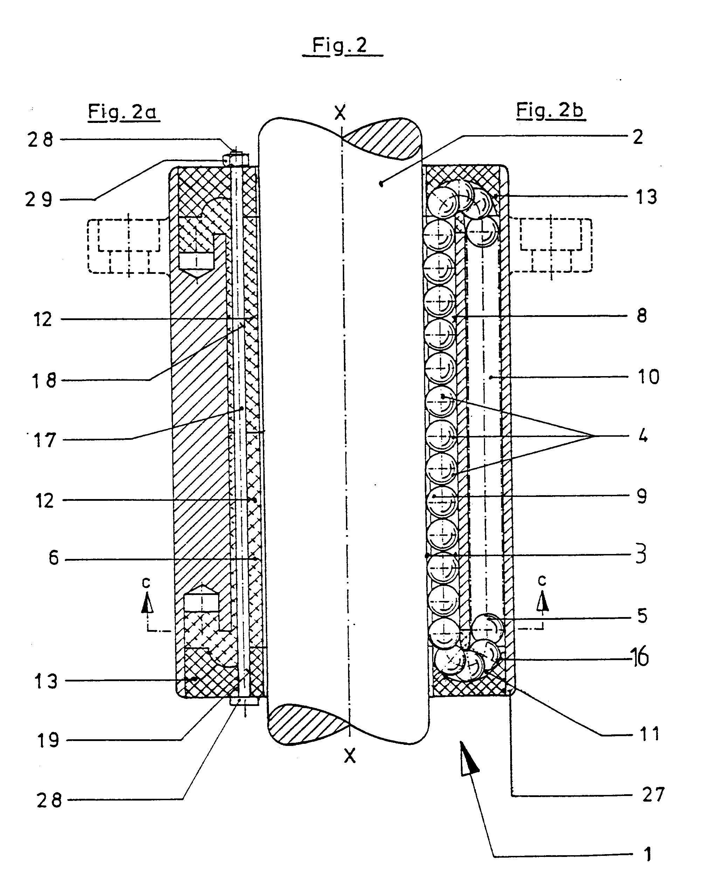

Die Kugelumlaufeinheit 1 gemäß den Figuren 1 und 2 dient zur Lagerung eines Tisches oder Maschinenteils auf einer Führungsschiene 2. Die Führungsschiene 2 ist im Querschnitt als Kreisprofil ausgebildet und über ein Befestigungselement auf einer Unterlage befestigbar. Die Führungsschiene 2 kann Bestandteil des Befestigungselementes sein oder aber mit diesem über geeignete Schraubverbindungen verbunden sein. Die Kugelumlaufeinheit 1 ist im Querschnitt geschlitzt ausgeführt und umschließt die Führungsschiene 2 teilweise. Die Kugelumlaufeinheit 1 besitzt 8 umfangsverteilt angeordnete Kugelreihen 5. Jede einzelne Kugelreihe 5 besteht aus einem Tragabschnitt 9, in welchem die sich in diesem Abschnitt befindlichen Kugeln 4 aus dem Käfig 6 radial nach innen herausragen und auf der Außenfläche 3 der Führungsschiene 2 anliegen. Ferner stützen die sich im Tragabschnitt 9 befindlichen Kugeln 4 an der Lauffläche 8, die von der Bohrung des Grundkörpers 7 gebildet ist, radial ab. Über Umlenkabschnitte 11 sind die Tragabschnitte 9 jeder Kugelreihe 5 mit dem Rückführabschnitt 10 verbunden. In den Umlenkabschnitten 11 und dem Rückführabschnitt 10 sind die Kugeln 4 lastfrei mit Spiel geführt. In diesen Abschnitten stehen die Kugeln 4 nicht in Berührung mit der Führungsschiene 2. Die Tragabschnitte 9 und Rückführabschnitte 10 erstrecken sich parallel zur Längsachse x-x der Führungsschiene 2 und damit zur Bohrungsachse der Bohrung des Grundkörpers 7. Der Käfig 6 zur Führung der Kugeln 4 ist mehrteilig ausgebildet. Er besteht aus den Innensegmenten 12, welche durch umfangsverteilte Stege 12a, welche Führungsrinnen 15 bilden, die die Kugeln 4 in den Tragabschnitten 9 seitlich führen, und aus den endseitig an diesen zentrierten Kopfstücken 13. Die Kopfstücke 13 und die Innensegmente 12 bilden im Bereich der Umlenkabschnitte 11 Führungsrinnen 16. Zur Stabilisierung des Käfigs 6 und insbesondere der Stege 12a der Innensegmente 12 sowie der Kopfstücke 13 sind Zentrierstäbe 17 vorgesehen. Diese Zentrierstäbe 17 sind jeweils in Bohrungen 18 der Stege 12a der Innensegmente 12 sowie dazu korrespondierenden Bohrungen 19 der Kopfstücke 13 eingesetzt. Die Bohrungen 19 in einem der Kopfstücke 13 können als Gewindebohrungen ausgebildet sein, in welche die Zentrierstäbe 17 mit ihrem als Gewindeende ausgebildeten Ende 28 eingeschraubt sind. Die Bohrungen 19 des anderen Kopfstückes 13 können als Durchgangsbohrungen gestaltet sein. Aus diesen sind die Gewindeenden 28 der Zentrierstäbe 17 herausgeführt. Auf die Enden 28 sind Muttern 29 aufgeschraubt. Durch Festziehen der Muttern 29 werden die Innensegmente 12 und die Kopfstücke 13 gegeneinander verspannt. Hierdurch wird auch der aus diesen Teilen bestehende Käfig 6 im Grundkörper 7 axial festgelegt. Die Innensegmente 12 und Kopfstücke 13 sind endseitig in vergrößerten Bohrungsabschnitten des Grundkörpers 7 aufgenommen und stützen sich entsprechend an den axialen Endflächen dieser vergrößerten Bohrungsabschnitte ab.

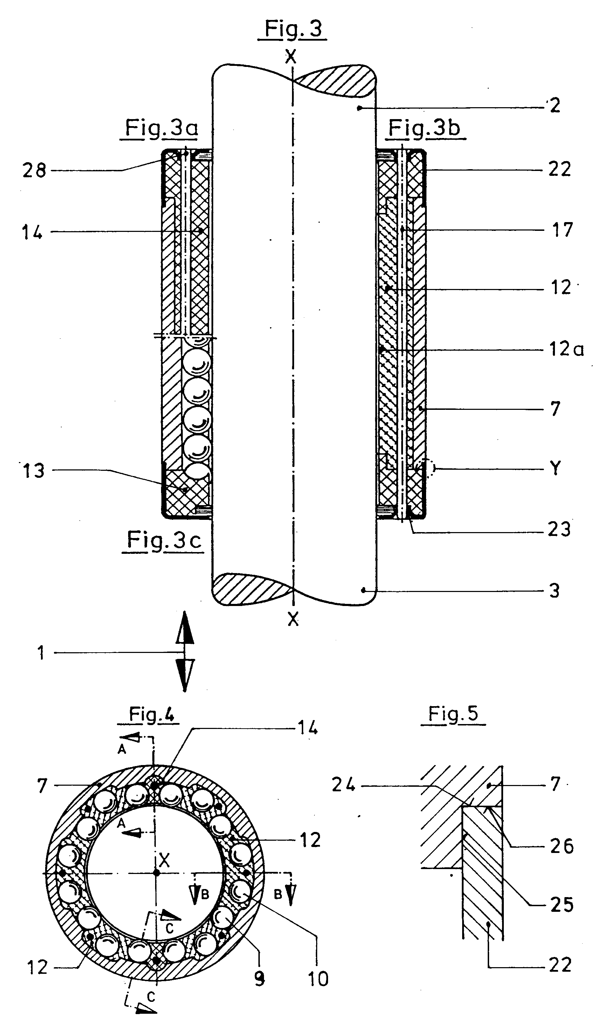

Bei der Ausführungsform nach den Figuren 3 bis 5 ist der Käfig aus Innensegmenten 12 sowie Kopfstücken 13 aufgebaut. Sowohl die Kopfstücke 13 als auch die Innensegmente 12 besitzen jeweils Stege 14 bzw. 12a, die zwischen benachbarte Tragabschnitte 9 der Kugeln 4 eingreifen und die Kugeln 4 führen. Die Stege 14 und 12a der Kopfstücke 13 und Innensegmente 12 werden ebenfalls von Zentrierstäben 17, die in sich ergänzenden Bohrungen 18 und 19 aufgenommen sind, durchdrungen. Zusätzlich sind die Kopfstücke 13 von Kappen 22 umschlossen, welche in ihrer Stirnfläche ebenfalls mit Bohrungen 23 versehen sind, in denen die Enden 28 der Zentrierstäbe 17 fixiert sind. Die Fixierung kann beispielsweise durch Verklemmen, Verstemmen oder durch einen Schweißpunkt erfolgen. Die Kappe 22 ist auf einer Zentrierfläche 25 des Grundkörpers 7 aufgenonmen und mit ihrer Stirnfläche 24 an der radial verlaufenden Stützfläche 26 des Grundkörpers 7 axial abgestützt.

Die Kappen 22 können beispielsweise aus Metall hergestellt sein. Hierdurch ergibt sich eine Ausführungsform, bei der der Grundkörper 7 besonders einfach gestaltet werden kann. Die am Ende des Grundkörpers bei der Ausführungsform nach den Figuren 1 und 2 vorgesehene Stufenbohrung entfällt.

### Bezugszeichenliste

- 1: Kugelumlaufeinheit
- 2: Führungsschiene
- 3: Außenfläche der Führungsschiene
- 4: Kugeln
- 5: Kugelreihen
- 6: Käfig
- 7: Grundkörper
- 8: Lauffläche im Grundkörper
- 9: Tragabschnitt
- 10: Rückführabschnitt
- 11: Umlenkabschnitt
- 12: Innensegmente
- 12a: Stege der Innensegmente
- 13: Kopfstücke
- 14: Stege der Kopfstücke
- 15,16: Führungsrinnen
- 17: Zentrierstäbe
- 18: Bohrung in Innensegmenten
- 19: Bohrung in Kopfstück
- 20:
- 21:
- 22: Kappe
- 23: Bohrung in Kappe
- 24: Stirnfläche der Kappe
- 25: Zentrierfläche am Grundkörper
- 26: Stützfläche des Grundkörpers
- 27: Kragen des Grundkörpers
- 28: Ende der Zentrierstange
- 29: Mutter
- X-X: Längsachse

## Patentansprüche

1. Kugelumlaufeinheit (1) für eine Linearkugelführung, die entlang der Längsachse (x-x) einer im Querschnitt kreisförmigen Führungsschiene (2) bewegbar ist, welche sie wenigstens teilweise umschließt, mit mehreren über den Querschnitt verteilt angeordneten endlosen Kugelreihen (5), die in einem mehrteiligen Käfig (6) und gegebenenfalls teilweise in einem Grundkörper (7) geführt sind, welche jeweils einen Tragabschnitt (9), in welchem die Kugeln (8) radial nach innen aus dem Käfig (6) zwecks Anlage an der Führungsschiene (2) herausragen, einen Rückführabschnitt (10) und beide an den Enden verbindende Umlenkabschnitte (11) aufweisen, bei denen sich Tragabschnitt (9) und Rückführabschnitt (10) jeweils parallel zur Längsachse (x-x) erstrecken und wobei die Käfigteile (12,13) jeweils Führungsrinnen (15,16) für die Kugeln (4) bilden, über Zentrierstäbe (17) miteinander verbunden und in einem Grundkörper (7) aufgenommen sind,
dadurch gekennzeichnet,
daß der Käfig (6) aus Kunststoff besteht und daß die den Käfig (6) bildenden Teile (12,13) parallel zur Längsachse (x-x) verlaufende Bohrungen (18,19) aufweisen, in welche durchgehende Zentrierstäbe (17) eingesetzt sind, die die Käfigteile (12,13) einandergegenüber und gegenüber dem Grundkörper (7) axial fixieren.

2. Kugelumlaufeinheit nach Anspruch 1,
dadurch gekennzeichnet,
daß der Käfig (6) aus Innensegmenten (12) und Kopfstücken (13) besteht und daß die Zentrierstäbe (17) gegenüber den einen axialen Abschluß bildenden Kopfstücken (13) fixiert sind.

3. Kugelumlaufeinheit nach Anspruch 2,
dadurch gekennzeichnet,
daß die Zentrierstäbe (17) gegenüber Endscheiben (20 fixiert sind, die endseitig an den Kopfstücken (13) abgestützt sind.

4. Kugelumlaufeinheit nach Anspruch 1,
dadurch gekennzeichnet,
daß der Käfig (6) aus Innensegmenten (12) und Kopfstücken (13) besteht und daß die Kopfstücke (13) von an den Enden des Grundkörpers (7) zentrierten Kappen (22) überdeckt sind, gegenüber denen die Zentrierstäbe (17) fixiert sind.

5. Kugelumlaufeinheit nach Anspruch 1,
dadurch gekennzeichnet,
daß der Käfig (6) aus Innensegmenten (12) mit Stegen (12a) und Kopfstücken (13) besteht und daß die Zentrierstäbe (17) durch die Stege (12a) der Innensegmente (12) des Käfigs, die sich zwischen zwei benachbarten Tragabschnitten (9) der Kugelreihen (5) befinden, axial hindurchverlaufen.

6. Kugelumlaufeinheit nach einem oder mehreren der Ansprüche 1 bis 5,
dadurch gekennzeichnet,
daß die Zentrierstäbe (17) durch Schweißen, Verstemmen oder Verschrauben fixiert sind.

7. Kugelumlaufeinheit nach einem oder mehreren der Ansprüche 1 bis 6,
dadurch gekennzeichnet,
daß die Zentrierstäbe (17) unter Vorspannung fixiert sind.

## Claims

1. A ball circulation unit (1) for linear ball guiding means, which is movable along the longitudinal axis (x-x) of a guiding roll (2) having a circular cross-section and being at least partially enclosed by the ball circulation unit, having a plurality of continuous ball rows (5) which are distributed across the cross-section and which are guided in a multi-component cage (6) and, optionally, partially in a base (7), said continuous ball rows each comprising a carrying portion (9) in which the balls project radially inwardly from the cage for the purpose of contacting the guiding rail (2), a returning portion (10) and deflecting portions (11) connecting said two portions at their ends, with the carrying portion (9) and returning portion (10) each extending parallel to the longitudinal axis (x-x) and with the cage parts (12, 13) each forming guiding grooves (15, 16) for the balls (4), being connected to one another by centring bars (17) and being received in a base (7),
characterised in
that the cage (6) consists of plastics and that the components (12, 13) forming the cage (6) comprise bores (18, 19) which extend parallel to the longitudinal axis (x-x) and in which continuous centring bars (17) are inserted axially fixing the cage parts (12, 13) relative to one another and relative to the base (7).

2. A ball circulation unit according to claim 1,
characterised in
that the cage (6) consists of inner segments (12) and head pieces (13) and that the centring bars (17) are fixed relative to the head pieces (13) constituting axial closing means.

3. A ball circulation unit according to claim 2,
characterised in
that the centring bars (17) are fixed relative to end discs (20) which, at their ends, are supported on the head pieces (13).

4. A bail circulation unit according to claim 1,
characterised in
the cage (6) consists of inner segments (12) and head pieces (13) and that the head pieces (13) are covered by caps (22) centred at the ends of the base (7), the centring bars (17) being fixed relative to the caps (22).

5. A ball circulation unit according to claim 1,
characterised in
that the cage (6) consists of inner segments (12) with webs (12a) and head pieces (13) and that the centring bars (17) axially extend through the webs (12a) of the inner segments (12) of the cage, which webs are positioned between two adjoining carrying portions (9) of the ball rows (5).

6. A ball circulation unit according to any one or several of claims 1 to 5,
characterised in
that the centring bars (17) are fixed by welding, caulking or by bolts.

7. A ball circulation unit according to any one or several of claims 1 to 6,
characterised in
that the centring bars (17) are fixed under pretension.

## Revendications

1. Unité à recirculation de billes (1) pour un guide linéaire à billes, qui peut être déplacée le long de l'axe longitudinal (x-x) d'un rail-guide (2) à section transversale en forme de cercle, l'unité entourant au moins partiellement ledit rail-guide, ladite unité comprenant plusieurs rangées de billes (5) sans fin agencées de façon répartie sur la section transversale, lesdites rangées étant guidées dans une cage (6) en plusieurs parties, et le cas échéant partiellement dans un corps de base (7), la cage et le corps de base comportant respectivement un tronçon porteur (9), dans lequel les billes (8) font saillies radialement vers l'intérieur hors de la cage (6) pour venir en contact contre le rail-guide (2), un tronçon de retour (10) et des tronçons de renvoi (12) qui relient ces deux tronçons aux extrémités, le tronçon porteur (9) et le tronçon de retour (10) s'étendant respectivement parallèlement à l'axe longitudinal (x-x), dans laquelle les parties (12, 13) de la cage forment chacune des goulottes de guidage (15, 16) pour les billes (4), sont reliées mutuellement au moyen de tiges de centrage (17) et sont reçues dans un corps de base (7),
caractérisée en ce que
la cage (6) est réalisée en matière plastique, et en ce que les pièces (12, 13) qui constituent la cage (6) présentent des perçages (18, 19) qui s'étendent parallèlement à l'axe longitudinal (x-x) dans lesquels sont introduites des tiges de centrage (17) continues, qui fixent axialement les parties de cage (12, 13) les unes par rapport aux autres et par rapport au corps de base (7).

2. Unité à recirculation de billes selon la revendication 1, caractérisée en ce que la cage (6) est constituée de segments intérieurs (12) et de pièces de tête (13), et en ce que les tiges de centrage (17) sont fixées par rapport aux pièces de tête (13) qui forment une fermeture axiale.

3. Unité à recirculation de billes selon la revendication 2, caractérisée en ce que les tiges de centrage (17) sont fixées par rapport à des disques d'extrémité (20), qui sont appuyés du côté de l'extrémité sur les pièces de tête (13).

4. Unité à recirculation de billes selon la revendication 1, caractérisée en ce que la cage (6) est constituée de segments intérieurs (12) et de pièces de tête (13), et en ce que les pièces de tête (13) sont recouvertes par des capuchons (22) centrés aux extrémités du corps de base (7), capuchons par rapport auxquels sont fixées les tiges de centrage (17).

5. Unité à recirculation de billes selon la revendication 1, caractérisée en ce que la cage (6) est constituée de segments intérieurs (12) avec des doigts (12a) et de pièces de tête (13), et en ce que les tiges de centrage (17) traversent axialement les doigts (12a) des segments intérieurs (12) de la cage, qui se trouvent entre deux tronçons porteurs voisins (9) des rangées de billes (5).

6. Unité à recirculation de billes selon l'une ou plusieurs des revendications 1 à 5, caractérisée en ce que les tiges de centrage (17) sont fixées par soudure, par matage ou par vissage.

7. Unité à recirculation de billes selon l'une ou plusieurs des revendications 1 à 6, caractérisée en ce que les tiges de centrage (17) sont fixées sous précontrainte.
